# EUROPÄISCHE PATENTSCHRIFT

(11) **EP 1 536 377 B1**
(45) Veröffentlichungstag und Bekanntmachung des Hinweises auf die Patenterteilung: **24.06.2009**
(21) Anmeldenummer: 04026413.7
(22) Anmeldetag: 08.11.2004
(51) Int. Cl.: G06T 11/60, G06F 17/21

(54) **Verfahren zur Veränderung der Abmessungen eines elektronisch gespeicherten Bildes**
Method for modifying the dimensions of an electronically stored image
Procédé pour modifier les dimensions d'une image mémorisée électroniquement

(30) Priorität: 06.11.2003 DE 10352341
(43) Veröffentlichungstag der Anmeldung: 01.06.2005
(73) Patentinhaber: socoto gmbh & co.kg, 54290 Trier (DE)
(72) Erfinder: Gründer, Bernhard, Dr., 54470 Leiser (DE)
(74) Vertreter: Bungartz, Klaus Peter

(56) Entgegenhaltungen:
- WO-A-02/27484
- DE-A1- 10 125 110
- DE-A1- 19 653 435
- US-A- 5 796 401

## Beschreibung

Die Erfindung betrifft ein Verfahren zur Veränderung der Abmessungen eines elektronisch gespeicherten Bildes, das aus unter-oder nebeneinander angeordneten oder sich ganz oder teilweise überlappenden Einzelobjekten zusammengesetzt ist, bei dem das Bild in zumindest einer waagerechten oder senkrechten Objektdimension verändert werden und die Einzelobjekte zumindest teilweise in zumindest einer waagerechten oder senkrechten Objektdimension verändert werden und die Änderung der Objektdimension teilweise nicht zwangsläufig proportional zur Änderung der Bilddimension ist.

Verfahren zur Veränderung der Abmessungen eines elektronisch gespeicherten Bildes dieser Art sind aus dem Werbebereich bekannt. Sie werden genutzt, um nach Erstellung eines Layouts als Vorlage für die Erstellung einer Druckvorlage das Bild an die verschiedenen Formate zum Beispiel einer Zeitung anzupassen.

Die US-A-5 796 401 beschreibt ein Verfahren zum Erzeugen eines dynamischen Layouts, insbesondere einer Bildschirmseite, bei dem Zeichnungsobjekte erstellt und dann angeordnet so werden, dass das Layout an unterschiedliche Größen des Wiedergabebereichs angepasst ist. Dieses Verfahren kann auch genutzt werden, um das Seitenlayout eines Druckverfahrens zu modifizieren. Über Regeln können dabei Objekte an die Ränder oder Ecken des Wiedergabebereichs angepasst werden oder relativ zueinander bei Änderung der Abmessung ausgerichtet werden.

Hier kann zwar die Größe des dynamischen Layouts verändert werden, aber es ist nicht möglich, die Seite insbesondere starken Größenänderungen zu unterwerfen, ohne dass durch die Änderung die Gefahr besteht, dass einzelne Bestandteile des Layouts durch extreme Verkleinerung nicht mehr lesbar werden oder ihren gewollten Anteil am Gesamteindruck der Seite verlieren.

Die DE 196 53 435 A1 wiederum beschreibt wiederum ein Verfahren zum elektronischen Publizieren von Texten, wobei verschiedene, hierarchisch voneinander abhängige Layout-Teile vordefiniert werden und zwischen den Layout-Teilen Beziehungen zur Herstellung eines einheitlichen Layouts nach Vorgabe des Verlegers defiliert werden können. Diese Technik ermöglicht eine Übertragung eines Layouts auf verschiedene Platzverhältnisse ohne dass hierfür manuell die Größe der jeweiligen Bereiche geändert werden müsste. Stattdessen wird ein anderes Element der Hierarchie anstelle des vorhergehenden verwendet, so dass der zur Verfügung stehende Raum bei gleich bleibendem Erscheinungsbild optimal genutzt werden kann.

Dieses Verfahren ermöglicht zwar die hierarchische Gliederung des Dokumentes und die Strukturierung der einzelnen Layout-Teile mit Definition von deren Aussehen, allerdings eignet es sich nur für Verfahren, bei denen zuerst der zur Verfügung stehende Raum definiert wird und erst danach diesem Raum ein Layout zugewiesen wird, das dann mit Inhalt gefüllt werden kann. Eine spätere Änderung des mit Text oder Bildern gefüllten Layouts durch Skalieren des Raumes ohne manuelle Nacharbeit ist dagegen mit diesem Verfahren nicht möglich.

Die DE 101 25 110 A1 schließlich beschreibt eine Datenverarbeitungseinrichtung mit einem System zum Erstellen von Druckvorlagen. Die Druckvorlagen sind hier aus einzelnen Layoutelementen zusammengesetzt, die sich anhand von vordefinierten Regeln in ihrem Erscheinungsbild, insbesondere auch in ihrer Größe ändern können, wenn in die einzelnen Layoutelemente Daten aus einer Datenbank eingeladen werden. Hier können beispielsweise Textrahmen durch das Einladen von größeren Textfragmenten erweitert werden oder im Gegenzug, wenn kein Text in der Datenbank enthalten sein sollte, gänzlich verschwinden.

Dieses Verfahren weist jedoch den Nachteil auf, dass die Änderung des Erscheinungsbildes des jeweiligen Layouts zwar gemäß der aufgestellten Regeln manipulierbar ist, die Änderungen aber immer an jedem der Objekte vorgenommen werden, ohne dass die Notwendigkeit oder Zulässigkeit überprüft würde. Somit wird bei starken Skalierungen eines der Objekte gemäß seiner Änderungsregel möglicherweise so klein, dass der optische Eindruck nicht mehr tolerierbar ist, so dass der Skalierungsfaktor als nicht möglich verworfen würde.

Es unterscheidet sich jedoch die Spaltenbreiten und -längen verschiedener Tagezeitung voneinander, so dass das gleiche Bild ohne Modifikation nicht verwendet werden kann. Ferner wird üblicherweise eine ganze Serie von Anzeigen geplant. In einer Illustrierten zum Beispiel kann eine halbe Seite als Werbeanzeige gebucht werden. In einer bundesweit erscheinenden Tageszeitung soll dagegen eine kleinere, und damit kostengünstigere Anzeige, etwa im Format "Drittelseite hochkant" gebucht werden. In einer lokalen Zeitung dagegen wird die ganze Seite gebucht, in einer anderen Zeitung eine Anzeige im Format "Zweidrittelseite hochkant".

Bei weiterhin bekannten, manuellen Verfahren wird nach Erstellung des Bildes für das Grundlayout mit Hilfe handelsüblicher DTP-Programme das Bild an die unterschiedlichen Größen angepasst. Hierbei werden die einzelnen Elemente des Bildes von Hand skaliert und umgesetzt, was nicht nur zu einem großen personellen Aufwand führt sondern auch ein wenig reproduzierbares Ergebnis mit sich bringt. Ferner muss jede Anzeige nachher einzeln freigegeben werden oder es muss vor der Präsentation des Projektes bereits jedes denkbare Format vorbereitet werden.

Aufgabe der Erfindung ist es daher, ein Verfahren zu schaffen, bei dem mittels einer Datenverarbeitungsanlage eine automatisierte Größenanpassung eines Bildes an verschiedene vorbestimmte Formate möglich ist.

Diese Aufgabe wird nach der Erfindung durch ein Verfahren mit den Merkmalen des Anspruch 1 gelöst.

Eine weitere Aufgabe der Erfindung ist es, ein Datenverarbeitungsprogramm und ein Anzeigenbuchungssystem zur Durchführung des Verfahrens zu schaffen, diese Aufgabe wird durch ein Datenverarbeitungsprogramm nach den Ansprüchen 25 bzw. durch ein Anzeigenbuchungssystem nach Anspruch 27 gelöst.

Durch die erfindungsgemäße Ausgestaltung des Verfahrens wird nun jedem Objekt des Bildes zumindest eine Objekteigenschaft zugeordnet. Meist werden mehrere Objekteigenschaften definiert werden, die dann bestimmen, wie sich das Objekt im Falle einer notwenigen Größenänderung verhält.

Im Falle einer bevorzugten Ausgestaltung des Verfahrens wird zunächst eine Grobanpassung des Bildes an den zur Verfügung stehenden Raum vorgenommen. Hierzu wird, wie bereits von Fenstern der Betriebssysteme durch Ziehen an einer der Ecken des Fensters bekannt, eine proportionale Vergrößerung oder Verkleinerung des Bildes vorgenommen, so dass es in einer Dimension, Höhe oder Breite, angepasst ist.

Nun wird entweder das Bild in der zweiten Dimension je nach Ausgangsformat zu groß oder zu klein sein. Diese Anpassung wird nun über ein Datenverarbeitungsprogramm selbsttätig vorgenommen. Das Datenverarbeitungsprogramm läuft auf einer Datenverarbeitungsanlage, wobei mit dem Begriff Datenverarbeitungsanlage nicht nur Einzelplatzrechner sondern auch Netzwerke verstanden sein sollen, bei denen die einzelnen Komponenten auf verschiedenen Rechnern installiert sind.

Zur Anpassung der Größe des Bildes wird das Bild als Zusammenstellung mehrerer Einzelobjekte angesehen. Diesen Einzelobjekten sind die Objekteigenschaften zugeordnet, die bei Vergrößerung bzw. Verkleinerung des Bildes vermeiden, dass das Bild verzerrt wird. Nachfolgend wird das Verfahren der Vergrößerung eines Bildes innerhalb des zweiten Verfahrensschrittes nach proportionaler Anpassung an die erste Dimension beschrieben, wobei das Verfahren einer Verkleinerung analog abläuft.

Der einfachste Weg wäre nun, alle Objekte um den Faktor zu vergrößern, der notwendig ist, um die Lücke zu füllen. Dies führt aber in den meisten Fällen zu einem unkontrollierten Überlagern der Einzelobjekte untereinander oder zu einem Hinauswachsen über die Ränder. Aus diesem Grund werden die Dimensionen der Einzelobjekte bevorzugt nur in der Richtung geändert, in der der Größenzuwachs benötigt wird. Die Objekteigenschaften definieren nun je nach Voreinstellung und Art des Einzelobjektes, wie dieser einseitige Zuwachs erfolgen soll, ohne dass das Einzelobjekt verzerrt wird.

Zunächst können die Objekteigenschaften beispielsweise für jedes Einzelobjekt eine proportionale Vergrößerung und Verschieben der dann angewachsenen Einzelobjekte nach Innen bewirken um so zu verhindern, dass ein Einzelobjekt über den Rand hinauswächst. Ein reines Verschieben der Objekte wird allerdings in den meisten Fällen nicht ausreichen, vielmehr werden dann die Einzelobjekte im Bereich der Bildmitte übereinander geschoben. Aus diesem Grund werden zumindest einige der Einzelobjekte ausschließlich oder zumindest überwiegend in eine Richtung vergrößert werden müssen.

Handelt es sich bei dem Einzelobjekt um ein Bild, kann dies einfach durch Definition eines Randbereiches erreicht werden, der bei Bedarf abgeschnitten werden kann. So wird bevorzugt schon bei Erstellung des Bildes eine Fotografie als Einzelobjekt gewählt, deren Randbereich groß genug ist, um einen bestimmten Toleranzbereich zu erhalten, der bei notwendiger Verkleinerung des Bildes herausgeschnitten werden kann oder bei notwendiger Vergrößerung des Bildes hinzugenommen werden kann. Letzteres ist natürlich nur dann möglich, wenn Erstellung des Bildes mit Einzelobjekten gearbeitet wird, von denen für das eigentliche Bild nur ein innerer Bereich verwendet wird. Werden dagegen die Objekteigenschaften nachträglich vergeben, kann natürlich kein weiterer Bereich mehr hinzugefügt werden. In diesem Fall müsste das Einzelobjekt zweckmäßigerweise zunächst proportional in beide Dimensionen vergrößert und anschließend dann einseitig beschnitten werden.

Auch die Textkomponenten des Bildes werden als Einzelobjekt aufgefasst. Hier kann eine Beschneidung dieses Einzelobjektes jedoch nicht angewandt werden, so dass entweder dieses Einzelobjekt sich wie eine Textbox eines handelsüblichen Textverarbeitungsprogramms verhält, also den Text innerhalb des Rahmen umzusetzen vermag, insbesondere an die neuen Platzverhältnisse angepasst umzuformatieren vermag. Dieses Umformatieren kann sich in einer einfachen Anpassung des Zeilenabstandes, des Zeichenabstandes oder der Schriftgröße erschöpfen.

Bevorzugt kann jedoch auch ein Alternativtext hinterlegt sein, so dass bei Unterschreiten einer Mindestgröße eine kürzere Textvariante gewählt werden kann. Dies verhindert, dass der Text infolge der Verkleinerung unleserlich wird. Auch für andere Einzelobjekte kann ein Austauschobjekt vorgesehen sein, so dass etwa im Falle einer Grafik ein kleineres Bild oder ein größeres Bild zu Verfügung steht. Alternativ kann ein Text auch dadurch verkleinert werden, dass einige Passagen des Textes als entbehrlich markiert werden, das Einzelobjekt als aus verschiedenen Teilen zusammengesetzt wird, wobei die Objekteigenschaften die Information enthalten, dass einzelne Teile des Einzelobjektes bei großem Verkleinerungsbedarf entfallen können.

Die Objekteigenschaften können für einzelne Einzelobjekte eine Sperrangabe umfassen, die bewirkt, dass ein Objekt nicht in der Größe veränderbar ist. Diese Option kann beispielsweise im Falle eines Firmenlogos gewählt werden, dass über den gesamten Bereich der Größenänderung des Gesamtbildes immer die gleiche Größe behalten soll.

Die Einzelobjekte können nicht nur durch einfaches Verschieben nach innen eingerückt werden. Es ist ferner auch möglich, die Einzelobjekte relativ zu einem beliebigen Bezugspunkt, der auch Teil eines anderen Einzelobjektes sein kann, zu verschieben. So kann zum Beispiel ein Bild drei nebeneinander angeordnete Fotografien als Einzelobjekte aufweisen, wobei bei Verkleinerung dieses Bildes die Fotografien nicht zusammen geschoben werden sondern die beiden äußeren Einzelobjekte auf einer Kreisbahn nach unten wandern, so dass nach der Größenänderung eine Dreiecksanordnung vorliegt.

Bevorzugt umfassen die Objekteigenschaften zumindest eines teilüberlagerungsfähigen Einzelobjektes eine Überlagerungsangabe, die einen Bereich des Einzelobjektes definiert, der von anderen Objekten bei Zusammenschieben der Objekte überlagert werden kann. Um nicht wahllos allen Einzelobjekten ein Überlagern zu gestatten, können die Objekteigenschaften des teilüberlagerungsfähigen Einzelobjektes eine oder mehrere Referenzangaben umfassen, die angibt, welches andere Einzelobjekt zur Überlagerung des teilüberlagerungsfähigen Einzelobjektes berechtigt ist.

Üblicherweise wird ein Bild Teilbereiche enthalten, die eher verkleinert werden können und Teilbereiche, die nur sehr ungern verkleinert werden sollen. Dies kann das Datenverarbeitungsprogramm in einer Präferenzangabe berücksichtigen, wobei die Präferenzangaben aller Einzelobjekte eine Rangfolge definieren, die angibt, in welcher Reihenfolge die Einzelobjekte anhand der übrigen Objekteigenschaften geändert werden. So werden Einzelobjekte mit niedriger Präferenz stärker in ihrer Größe geändert als Einzelobjekte mit hoher Präferenz. Die Präferenzangabe kann auch zu einer hierarchischen Veränderung führen, dass zunächst die Einzelobjekte mit niedriger Präferenz modifiziert werden und erst später diejenigen mit hoher Präferenz. Auch eine Kombination aus hierarchischer Ordnung und zeitgleichem am unterschiedlichen starken Größenzuwachs ist möglich.

Einige der Einzelobjekte können reine Füllobjekte eines großen Bildes sein, wobei die Objekteigenschaften die Angabe umfassen, dass bei Erreichen einer kritischen Verkleinerung des Bildes das Füllobjekt entfallen kann. Dies bietet sich insbesondere bei sehr großen Größenschwankungen mit vielen Textbestandteilen an, da ansonsten die Lesbarkeit des Textes gefährdet sein könnte.

Als Hintergrund des Bildes kann ein Hintergrundobjekt vorgesehen ist, dass von anderen Einzelobjekten überlagert wird. Das Hintergrundobjekt ist wie die anderen Objekte ein Einzelobjekt, dass mit Hintergrundeigenschaften versehen ist, die die Änderung des Hintergrundobjektes bei Änderung von seiner Größe definieren. Dies kann beispielsweise dadurch geschehen, dass der Hintergrund aus neben- und/oder untereinander angeordneten unveränderlichen Hintergrundelementen besteht, wobei die am Rand angeordneten Hintergrundelemente auf das aktuelle Maß des Bildes beschnitten werden.

Bei einer weiteren bevorzugten Ausgestaltung des Verfahrens wird das Bild in waagerechte und/oder senkrechte Bereiche unterteilt, wobei jedem Bereich ein Bereichsparameter zugeordnet wird, der einen Grad der Bereitschaft des Bereiches zur Größenänderung definiert, wobei bei Größenänderung des Bildes zunächst die Größen der Bereiche anhand der Grade der Bereitschaft zur Größenänderung festgelegt werden und anschließend innerhalb der Bereiche die darin angeordneten Einzelobjekte in ihrer Größe an die Bereichsgröße angepasst werden. Dies führt zunächst zu einer Grobeinteilung des Bildes und ermöglicht es, dass wenig oder gar nicht flexiblen Bildbereichen Rechnung getragen werden kann.

So kann es zum Beispiel sein, dass die obere Hälfte eines Bildes problemlos vergrößert werden könnte, während die untere Hälfte fast ausschließlich Einzelobjekte enthält, die kaum oder gar nicht veränderbar sind. Würde nun jeder Bereich des Bildes proportional gleich vergrößert, würde dies zu Problemen im unteren Bereich führen. Auch kann es sein, dass sowohl der untere also auch ein schmalerer oberer Bereich stark vergrößerbar sind, während in der Mitte ein Bereich vorgesehen ist, dessen Größe nicht geändert werden soll. Hier kann die Aufteilung des Bildes in Bereich genutzt werden, um etwa de starren Bereich als Ganzes zu verschieben.

Der Bereichsparameter kann bei Erstellung des Bildes oder auch später manuell vorgegeben werden. Eine weitere Variante besteht darin, den Bereichsparameter über das Datenverarbeitungsprogramm anhand der jedem Einzelobjekt zugewiesenen Objekteigenschaften berechnen zu lassen. Das Datenverarbeitungsprogramm wird dabei zunächst für jeden Bereich eine minimale Bereichsgröße durch Größenänderung der Einzelobjekte den zuvor beschriebenen Grundsätzen bestimmen, anschließend eine maximale Bereichsgröße bestimmen und dann ausgehend von einem Mittelwert aus der minimalen und der maximalen Bereichsgröße die Bereiche schrittweise verkleinern, bis die Bereiche die gewünschte Fläche des Bildes abdecken, wobei nach Festlegung der Bereichsgrößen die in den Bereichen angeordneten Objekte in ihrer Größe angepasst werden.

Die Objekteigenschaften kann eine Nachfrageoption umfassen, die während der Verarbeitung durch die Software bewirkt, dass ein Fenster geöffnet wird, über dass ein Benutzer der Datenverarbeitungsanlage die voreingestellten Objekteigenschaften nochmals ändern kann, um auf die Größenänderung des Bildes nachträglich zur Definition der Objekteigenschaften nachmals Einfluss zu nehmen. Die Nachfrageoption kann Größenänderung des Einzelobjektes oder von dem Benutzer durch eine Eingabe, insbesondere durch Anklicken des Einzelobjektes mittels einer Computermaus aktiviert werden.

Das erfindungsgemäße Verfahren wird bevorzugt eingesetzt, um Anzeigen ausgehend von einem Grundbild einer Kampagne zu schalten. Hierzu weist das Datenverarbeitungsprogramm bevorzugt vordefinierte Bildgröße auf, die den Standardmaßen der Printmedien entsprechen. Die Objekteigenschaften werden bevorzugt unmittelbar bei Erstellung des Bildes definiert. Sie können aber auch später hinzugefügt werden, etwa nachdem das Bild in das Datenverarbeitungsprogramm importiert wurde. Die Objekteigenschaften können im Bild als zusätzliche Information gespeichert sein, bevorzugt werden sie jedoch in einer separaten Parameterdatei abgespeichert werden.

Ferner können die Einzelobjekte in einer solchen Parameterdatei abgespeichert sein, während das Bild nur ein Gerüst enthält, das mit den Einzelobjekten nach Größenmodifikation gefüllt wird. Das Datenverarbeitungsprogramm kann als Plug-In-Programm zur Implementation in ein handelsübliches Grafikprogramm, insbesondere ein DTP-Programm ausgebildet sein. So kann ein zusätzliches Modul übliche DTP-Software ertüchtigen, eine Größenanpassung selbsttätig vorzunehmen.

Ein Verfahren nach der Erfindung wird zum Beispiel in einem Anzeigenbuchungssystem verwendet, bei dem mit einem Grafikprogramm, das auf einer in ein Netzwerk integrierten Datenverarbeitungsanlage abläuft, das Bild erstellt wird. Üblicherweise enthält das Bild zunächst nur ein Gerüst. Während die Einzelobjekte in einer Katalogdatei abgelegt sind. Eine Parameterdatei, die mit der Katalogdatei identisch sein kann, enthält die Information, welches Einzelobjekt wo angeordnet ist. Die so erstellte Bilddatei ist über das Netzwerk zu einer Druckvorbereitung übermittelbar, wobei nach Erstellung der Bilddatei im Grafikprogramm die Größe des der Bilddatei zugrunde liegenden Bildes nach den oben beschriebenen Verfahren an handelsübliche Spalten- oder Seitenmaße der Printmedien anpassbar ist.

Weitere Merkmale und Vorteile der Erfindung ergeben sich aus den Unteransprüchen und aus der nachfolgenden Beschreibung eines Ausführungsbeispiels.

In einem ersten Verfahrensschritt wird zunächst eine generelle Skalierungsrichtung festgelegt, in die das Bild gestreckt werden kann. Die hierzu rechtwinklige Richtung wird zuvor über eine reine Vergrößerung oder Verkleinerung des Bildes berücksichtigt. Ist über die Vergrößerung des Bildes zum Beispiel wie im dargestellten Beispiel die Breite des Bildes angepasst, muss es in der Länge gedehnt werden, um den zur Verfügung stehenden Platz einnehmen zu können, beziehungsweise in die zur Verfügung stehende Höhe eingepasst werden zu können.

In dem weiteren Schritt wird jedem Einzelobjekt ein Parameter zugewiesen, der angibt, wie sich das Einzelobjekt bei einem Höhenwachstum um δ mm verhalten soll. Im nächsten Schritt werden dann die Bildelemente in das Objekt eingepflegt. Hierzu wird auf die Parameter zurückgegriffen, die der Ersteller des Bildes zuvor festgelegt hat. Dabei können Bilder in der Größe verändert werden oder auch beschnitten werden, um einzelne Bestandteile des Bildes nicht so klein werden zu lassen, dass sie unschön wirken oder nicht mehr erkennbar sind. Umgekehrt ist es auch möglich, dass ein Bild bei großer Streckung vergrößert wird, in dem beispielsweise ein zusätzlicher Bildausschnitt hinzugenommen wird.

Im vierten Schritt werden dann Textelemente eingepflegt. Hierzu stehen verschiedene Variationen zur Verfügung, insbesondere kann über die Zeilenabstände eine Größe des Textes angepasst werden. Ferner können über die Schriftgröße vermieden werden, dass Zeilen- oder Buchstabenabstände zu groß werden.

Nachdem die Einzelobjekte an den zur Verfügung stehenden Platz angepasst sind, im Falle der Notwendigkeit verschoben sind, kann das gesamte Bild als Motivvorlage fertig gestellt werden.

## Patentansprüche

1. Verfahren zur Veränderung der Abmessungen eines elektronisch gespeicherten Bildes, das aus unter- oder nebeneinander angeordneten oder sich ganz oder teilweise überlappenden Einzelobjekten zusammengesetzt ist, bei dem das Bild in zumindest einer waagerechten oder senkrechten Objektdimension verändert wird, die Einzelobjekte zumindest teilweise in zumindest einer waagerechten oder senkrechten Objektdimension verändert werden und die Änderung der Objektdimension teilweise nicht zwangsläufig proportional zur Änderung der Bilddimension ist, wobei
• zur Anordnung und Größenänderung der Einzelobjekte bei Änderung der waagerechten und/oder der senkrechten Bilddimension über ein auf einer Datenverarbeitungsanlage ablaufendes Datenverarbeitungsprogramm jedem Einzelobjekt Objekteigenschaften zugewiesen werden, diese Objekteigenschaften eine Veränderungsfähigkeit der Einzelobjekte definieren und eine Präferenzangabe umfassen sowie in einem Speicher abgelegt werden,
• über das Datenverarbeitungsprogramm eine Größenänderung und/oder Positionsänderung der Einzelobjekte vorgenommen wird,
• die Präferenzangaben aller Einzelobjekte eine Rangfolge definieren, die angibt, in welcher Reihenfolge die Einzelobjekte anhand der übrigen Objekteigenschaften geändert werden,
• die Präferenzangabe einen Umfang des Ausmaßes der Änderung definiert, wobei die Einzelobjekte zwar zeitgleich änderbar sind, jedoch Einzelobjekte mit kleinerer Präferenzangabe eine stärkere Größenänderung erfahren als Einzelobjekte mit größerer Präferenzangabe und wobei
• das Bild in waagerechte und/oder senkrechte Bereiche unterteilt wird und jedem Bereich ein über das Datenverarbeitungsprogramm anhand der jedem Einzelobjekt zugewiesenen Objekteigenschaften berechneter Bereichsparameter zugeordnet wird, der einen Grad der Bereitschaft des Bereiches zur Größenänderung definiert und bei Größenänderung des Bildes zunächst die Größen der Bereiche anhand der Grade der Bereitschaft zur Größenänderung festgelegt und anschließend innerhalb der Bereiche die darin angeordneten Einzelobjekte in ihrer Größe an die Bereichsgröße angepasst werden, und
• das Datenverarbeitungsprogramm nach den vorstehenden Verfahrensschritten durch Größenänderung der Einzelobjekte zunächst für jeden Bereich eine minimale Bereichsgröße und anschließend eine maximale Bereichsgröße bestimmt und dann ausgehend von einem Mittelwert aus der minimalen und der maximalen Bereichsgröße die Bereiche schrittweise verkleinert, bis die Bereiche die gewünschte Fläche des Bildes abdecken, wobei nach Festlegung der Bereichsgrößen die in den Bereichen angeordneten Objekte in ihrer Größe angepasst werden.

2. Verfahren zur Veränderung der Abmessungen eines elektronisch gespeicherten Bildes nach Anspruch 1, **dadurch gekennzeichnet, dass** in einem ersten, manuell durchgeführten Verfahrensschritt das Bild durch proportionales Skalieren mit Änderung der waagerechten Objektdimension auf eine gewünschte Sollbreite oder mit Änderung der senkrechten Objektdimension auf eine gewünschte Sollhöhe an eine erste Dimension angepasst wird und in einem zweiten Verfahrensschritt die Anpassung an eine zweite Dimension erfolgt, wobei innerhalb des zweiten Verfahrensschrittes die Änderung der Objektdimensionen anhand der gespeicherten Objekteigenschaften erfolgt.

3. Verfahren zur Veränderung der Abmessungen eines elektronisch gespeicherten Bildes nach einem der beiden vorhergehenden Ansprüche, **dadurch gekennzeichnet, dass** die Objekteigenschaften zumindest die maximale Verschiebbarkeit in zumindest eine Richtung und die maximale Änderung der waagerechten und/oder senkrechten Objektdimension festlegen.

4. Verfahren zur Veränderung der Abmessungen eines elektronisch gespeicherten Bildes nach einem der vorhergehenden Ansprüche, **dadurch gekennzeichnet, dass** die Objekteigenschaften zumindest eines Einzelobjektes eine Sperrangabe umfassen, die bewirkt, dass ein Objekt nicht in der Größe veränderbar ist.

5. Verfahren zur Veränderung der Abmessungen eines elektronisch gespeicherten Bildes nach einem der vorhergehenden Ansprüche, **dadurch gekennzeichnet, dass** zumindest einige Einzelobjekte Zeichnungsobjekte sind, wobei die Objekteigenschaften zusätzlich eine Randangabe umfassen, die einen Toleranzbereich definiert, wobei die Größenänderung des Zeichnungsobjektes auch durch Abschneiden oder Hinzugeben eines Randbereiches an wenigstens einer Seite des Zeichnungsobjekte erfolgt.

6. Verfahren zur Veränderung der Abmessungen eines elektronisch gespeicherten Bildes nach einem der vorhergehenden Ansprüche, **dadurch gekennzeichnet, dass** zumindest ein austauschbares Einzelobjekt vorgesehen ist, für das eines oder mehrere Alternativobjekte vorgesehen sind, die in ihrer Größe zu dem austauschbaren Einzelobjekt verschieden sind, wobei die Objekteigenschaften des austauschbaren Einzelobjektes eine Alternativangabe umfassen, die bei Unterschreiten einer minimalen Größe ein kleineres Alternativobjekt oder Überschreiten einer maximalen Größe ein größeres Alternativobjekt ausgewählt wird.

7. Verfahren zur Veränderung der Abmessungen eines elektronisch gespeicherten Bildes nach einem der vorhergehenden Ansprüche, **dadurch gekennzeichnet, dass** die Objekteigenschaften zumindest eines Einzelobjektes eine Verlagerungsangabe umfassen, die eine Verschiebbarkeit des Einzelobjektes relativ zu einem definierten Bezugspunkt definiert.

8. Verfahren zur Veränderung der Abmessungen eines elektronisch gespeicherten Bildes nach dem vorhergehenden Anspruch, **dadurch gekennzeichnet, dass** der Bezugspunkt ein Punkt eines anderen Einzelobjektes ist.

9. Verfahren zur Veränderung der Abmessungen eines elektronisch gespeicherten Bildes nach einem der vorhergehenden Ansprüche, **dadurch gekennzeichnet, dass** die Objekteigenschaften zumindest eines teilüberlagerungsfähigen Einzelobjektes eine Überlagerungsangabe umfassen, die einen Bereich des Einzelobjektes definiert, der von anderen Objekten überlagert werden kann.

10. Verfahren zur Veränderung der Abmessungen eines elektronisch gespeicherten Bildes nach dem vorhergehenden Anspruch, **dadurch gekennzeichnet, dass** die Objekteigenschaften des teilüberlagerungsfähigen Einzelobjektes eine oder mehrere Referenzangaben umfassen, die angibt, welches andere Einzelobjekt zur Überlagerung des teilüberlagerungsfähigen Einzelobjektes berechtigt ist.

11. Verfahren zur Veränderung der Abmessungen eines elektronisch gespeicherten Bildes nach einem der vorhergehenden Ansprüche, **dadurch gekennzeichnet, dass** zumindest einige Einzelobjekte Textobjekte sind, wobei die Objekteigenschaften die Textformatangaben maximaler Variationsbereich der Schriftgröße und/oder maximaler Variationsbereich des Zeichenabstandes und/oder maximaler Variationsbereich des Zeilenabstandes umfassen.

12. Verfahren zur Veränderung der Abmessungen eines elektronisch gespeicherten Bildes nach dem vorhergehenden Anspruch, **dadurch gekennzeichnet, dass** Textformatangaben alternative Schriftarten mit geringerer oder größerer Laufweite umfassen.

13. Verfahren zur Veränderung der Abmessungen eines elektronisch gespeicherten Bildes nach einem der beiden vorhergehenden Ansprüche, **dadurch gekennzeichnet, dass** in den Textobjekten einzelnen Passagen mit einem Entbehrlich-Attribut versehen werden, wobei bei Erreichen der maximalen Verkleinerung mit dem Entbehrlich-Attribut versehene Passagen herausgestrichen werden.

14. Verfahren zur Veränderung der Abmessungen eines elektronisch gespeicherten Bildes nach einem der vorhergehenden Ansprüche, **dadurch gekennzeichnet, dass** zumindest einige Einzelobjekte Füllobjekte sind, wobei die Objekteigenschaften die Angabe umfassen, dass bei Erreichen einer kritischen Verkleinerung des Bildes das Füllobjekt entfallen kann.

15. Verfahren zur Veränderung der Abmessungen eines elektronisch gespeicherten Bildes nach einem der vorhergehenden Ansprüche, **dadurch gekennzeichnet, dass** wenigstens ein Hintergrundobjekt vorgesehen ist, dass von anderen Einzelobjekten überlagert wird und mit Hintergrundeigenschaften versehen ist, die die Änderung des Hintergrundobjektes bei Änderung von seiner Größe definieren.

16. Verfahren zur Veränderung der Abmessungen eines elektronisch gespeicherten Bildes nach dem vorhergehenden Anspruch, **dadurch gekennzeichnet, dass** die Hintergrundeigenschaften bestimmen, dass der Hintergrund aus neben-und/oder untereinander angeordneten unveränderlichen Hintergrundelementen besteht, wobei die am Rand angeordneten Hintergrundelemente auf das aktuelle Maß des Bildes beschnitten werden.

17. Verfahren zur Veränderung der Abmessungen eines elektronisch gespeicherten Bildes nach Anspruch 15, **dadurch gekennzeichnet, dass** die Hintergrundeigenschaften bestimmen, dass der Hintergrund aus neben- und/oder untereinander angeordneten Hintergrundelementen mit veränderbarer Größe besteht, wobei die am Rand angeordneten Hintergrundelemente auf das aktuelle Maß des Bildes beschnitten werden.

18. Verfahren zur Veränderung der Abmessungen eines elektronisch gespeicherten Bildes nach dem vorhergehenden Anspruch, **dadurch gekennzeichnet, dass** der Bereichsparameter manuell vorgegeben wird.

19. Verfahren zur Veränderung der Abmessungen eines elektronisch gespeicherten Bildes nach einem der vorhergehenden Ansprüche, **dadurch gekennzeichnet, dass** die Objekteigenschaften eine Nachfrageoption umfassen, die bewirkt, dass ein Benutzer der Datenverarbeitungsanlage die voreingestellten Objekteigenschaften nochmals ändern kann, um auf die Größenänderung nachträglich Einfluss zu nehmen.

20. Verfahren zur Veränderung der Abmessungen eines elektronisch gespeicherten Bildes nach dem vorhergehenden Anspruch, **dadurch gekennzeichnet, dass** die Nachfrageoption bei Größenänderung des Einzelobjektes aktiviert wird.

21. Verfahren zur Veränderung der Abmessungen eines elektronisch gespeicherten Bildes nach dem vorhergehenden Anspruch, **dadurch gekennzeichnet, dass** die Nachfrageoption von dem Benutzer durch eine Eingabe, insbesondere durch Anklicken des Einzelobjektes mittels einer Computermaus aktiviert wird.

22. Verfahren zur Veränderung der Abmessungen eines elektronisch gespeicherten Bildes nach einem der vorhergehenden Ansprüche, **dadurch gekennzeichnet, dass** mehrere Bildgrößen vordefiniert sind, an die das Bild angepasst werden kann.

23. Verfahren zur Veränderung der Abmessungen eines elektronisch gespeicherten Bildes nach dem vorhergehenden Anspruch, **dadurch gekennzeichnet, dass** die Bildgrößen die Größen von Standardanzeigen, nämlich eine ganze Seite, eine Drittelseite hochkant oder eine Zweidrittelseite hochkant eines Printmediums sind.

24. Verfahren zur Veränderung der Abmessungen eines elektronisch gespeicherten Bildes nach dem vorhergehenden Anspruch, **dadurch gekennzeichnet, dass** die Objekteigenschaften in einer separaten Parameterdatei abgespeichert werden.

25. Datenverarbeitungsprogramm, mit dem ein Verfahren nach einem der vorhergehenden Ansprüche durchführbar ist.

26. Datenverarbeitungsprogramm nach dem vorhergehenden Anspruch, **dadurch gekennzeichnet, dass** es als Plug-In-Programm zur Implementation in ein DTP-Programm ausgebildet ist.

27. Anzeigenbuchungssystem mit einem Grafikprogramm, das auf einer in ein Netzwerk integrierten Datenverarbeitungsanlage abläuft, wobei über das Grafikprogramm eine Bilddatei erstellbar ist, die über das Netzwerk zu einer Druckvorbereitung übermittelbar ist und nach Erstellung der Bilddatei zur Anpassung an Spalten- oder Seitenmaße der Printmedien die Größe des der Bilddatei zugrunde liegenden Bildes nach einem der Ansprüche 1 bis 24 veränderbar ist.

## Claims

1. Method for changing the dimensions of an electronically stored image composed of individual objects which are arranged below or next to one another or which fully or partially overlap one another, in which the image is changed in at least one horizontal or vertical object dimension, at least some of the individual objects are changed in at least one horizontal or vertical object dimension, and the change in the object dimension is sometimes not necessarily proportional to the change in the image dimension, wherein
• in order to arrange and change the size of the individual objects in the event of a change in the horizontal and/or vertical image dimension, object properties are assigned to each individual object via a data processing program which runs on a data processing system, these object properties define a changeability of the individual objects and comprise a preference indication and are stored in a memory,
• a change in size and/or a change in position of the individual objects is carried out via the data processing program,
• the preference indications of all the individual objects define a ranking which indicates the order in which the individual objects are changed on the basis of the remaining object properties,
• the preference indication defines an extent of the degree of change, wherein although the individual objects can be changed at the same time, individual objects with a lower preference indication undergo a greater change in size than individual objects with a greater preference indication, and wherein
• the image is divided into horizontal and/or vertical areas and each area is assigned an area parameter which is calculated via the data processing program on the basis of the object properties assigned to each individual object and which defines an extent of the ability of the area to change its size and, in the event of a change in the size of the image, firstly the sizes of the areas are defined on the basis of the extents of the ability to change size and then within the areas the individual objects arranged therein are adapted in terms of their size to the size of the area, and
• the data processing program after the above method steps firstly determines for each area a minimum area size by changing the size of the individual objects and then determines a maximum area size and then, based on a mean value from the minimum and maximum area size, reduces the size of the areas in steps until the areas cover the desired surface area of the image, wherein, once the area sizes have been defined, the objects arranged in the areas are adapted in terms of their size.

2. Method for changing the dimensions of an electronically stored image according to claim 1, **characterised in that**, in a first method step carried out manually, the image is adapted to a first dimension by proportional scaling with a change in the horizontal object dimension to a desired nominal width or with a change in the vertical object dimension to a desired nominal height and, in a second method step, adaptation to a second dimension takes place, wherein within the second method step the change in the object dimensions takes place on the basis of the stored object properties.

3. Method for changing the dimensions of an electronically stored image according to one of the two preceding claims, **characterised in that** the object properties define at least the maximum displaceability in at least one direction and the maximum change in the horizontal and/or vertical object dimension.

4. Method for changing the dimensions of an electronically stored image according to one of the preceding claims, **characterised in that** the object properties of at least one individual object comprise a blocking indication which means that an object cannot be changed in terms of its size.

5. Method for changing the dimensions of an electronically stored image according to one of the preceding claims, **characterised in that** at least some individual objects are drawing objects, wherein the object properties additionally comprise an edge indication which defines a tolerance range, wherein the change in size of the drawing object also takes place by cutting off or adding an edge area to at least one side of the drawing object.

6. Method for changing the dimensions of an electronically stored image according to one of the preceding claims, **characterised in that** at least one exchangeable individual object is provided, for which there are provided one or more alternative objects which differ from the exchangeable individual object in terms of their size, wherein the object properties of the exchangeable individual object comprise an alternative indication which will select a smaller alternative object if a minimum size is not reached or a larger alternative object if a maximum size is exceeded.

7. Method for changing the dimensions of an electronically stored image according to one of the preceding claims, **characterised in that** the object properties of at least one individual object comprise a displacement indication which defines a displaceability of the individual object relative to a defined reference point.

8. Method for changing the dimensions of an electronically stored image according to the preceding claim, **characterised in that** the reference point is a point of another individual object.

9. Method for changing the dimensions of an electronically stored image according to one of the preceding claims, **characterised in that** the object properties of at least one partially superposable individual object comprise a superposition indication which defines an area of the individual object that may be superposed by other objects.

10. Method for changing the dimensions of an electronically stored image according to the preceding claim, **characterised in that** the object properties of the partially superposable individual object comprise one or more reference indications which indicate which other individual object is authorised to superpose the partially superposable individual object.

11. Method for changing the dimensions of an electronically stored image according to one of the preceding claims, **characterised in that** at least some individual objects are text objects, wherein the object properties comprise the text format indications of the maximum variation range of the font size and/or of the maximum variation range of the character spacing and/or of the maximum variation range of the line spacing.

12. Method for changing the dimensions of an electronically stored image according to the preceding claim, **characterised in that** text format indications comprise alternative fonts with a smaller or larger spacing.

13. Method for changing the dimensions of an electronically stored image according to one of the two preceding claims, **characterised in that** in the text objects individual passages are provided with a dispensable attribute, wherein passages provided with the dispensable attribute are deleted if the maximum reduction in size is reached.

14. Method for changing the dimensions of an electronically stored image according to one of the preceding claims, **characterised in that** at least some individual objects are filler objects, wherein the object properties comprise the indication that the filler object can be omitted if a critical reduction in the size of the image is reached.

15. Method for changing the dimensions of an electronically stored image according to one of the preceding claims, **characterised in that** at least one background object is provided which is superposed by other individual objects and is provided with background properties which define the change in the background object in the event of a change in its size.

16. Method for changing the dimensions of an electronically stored image according to the preceding claim, **characterised in that** the background properties define the fact that the background consists of unchangeable background elements arranged next to and/or below one another, wherein the background elements arranged at the edge are trimmed to the current size of the image.

17. Method for changing the dimensions of an electronically stored image according to claim 15, **characterised in that** the background properties define the fact that the background consists of background elements of changeable size arranged next to and/or below one another, wherein the background elements arranged at the edge are trimmed to the current size of the image.

18. Method for changing the dimensions of an electronically stored image according to the preceding claim, **characterised in that** the area parameter is manually predefined.

19. Method for changing the dimensions of an electronically stored image according to one of the preceding claims, **characterised in that** the object properties comprise a demand option which means that a user of the data processing system can change the preset object properties once again in order to subsequently influence the change in size.

20. Method for changing the dimensions of an electronically stored image according to the preceding claim, **characterised in that** the demand option is activated in the event of a change in size of the individual object.

21. Method for changing the dimensions of an electronically stored image according to the preceding claim, **characterised in that** the demand option is activated by the user by means of an input, in particular by clicking on the individual object using a computer mouse.

22. Method for changing the dimensions of an electronically stored image according to one of the preceding claims, **characterised in that** a number of image sizes are predefined, to which the image can be adapted.

23. Method for changing the dimensions of an electronically stored image according to the preceding claim, **characterised in that** the image sizes are the sizes of standard advertisements in print media, namely a full page, one-third of a page in the vertical direction or two-thirds of a page in the vertical direction.

24. Method for changing the dimensions of an electronically stored image according to the preceding claim, **characterised in that** the object properties are stored in a separate parameter file.

25. Data processing program, by means of which a method according to one of the preceding claims can be carried out.

26. Data processing program according to the preceding claim, **characterised in that** it is designed as a plug-in program for implementation in a DTP program.

27. Advertisement booking system comprising a graphics program which runs on a data processing system integrated in a network, wherein an image file can be created via the graphics program, which image file can be transmitted via the network to a printing preparation station and, once the image file has been created, the size of the image on which the image file is based can be changed according to one of claims 1 to 24 in order to adapt it to column or page dimensions of the print media.

## Revendications

1. Procédé pour modifier les dimensions d'une image mémorisée électroniquement, ladite image étant composée d'objets individuels disposés les uns en dessous des autres ou les uns à côté des autres ou se chevauchant en totalité ou en partie, dans lequel l'image est modifiée dans au moins une dimension d'objet horizontale ou verticale, les objets individuels étant modifiés au moins en partie dans au moins une dimension d'objet horizontale ou verticale et la modification de la dimension d'objet n'étant en partie pas obligatoirement proportionnelle à la modification de la dimension d'image ;
- des propriétés d'objet étant attribuées à chaque objet individuel pour l'agencement et la modification de la taille des objets individuels en cas de modification de la dimension d'image horizontale et/ou verticale via un programme de traitement des données installé sur une installation de traitement des données en fonctionnement, ces propriétés d'objet définissant une capacité de modification des objets individuels et comprenant une indication de préférence et étant mémorisées dans une mémoire ;
- une modification de la taille et/ou une modification de la position des objets individuels étant réalisée via le programme de traitement des données ;
- les indications de préférence de tous les objets individuels définissant une hiérarchie qui indique l'ordre de modification des objets individuels à l'aide des propriétés d'objet restantes ;
- l'indication de préférence définissant l'ampleur de la modification, les objets individuels étant certes modifiables simultanément, mais les objets individuels subissant une modification de taille plus importante avec une plus petite indication de préférence que les objets individuels présentant une indication de préférence plus importante ;
- l'image étant divisée en zones horizontales et/ou verticales et un paramètre de zone calculé par l'intermédiaire du programme de traitement des données à l'aide des propriétés d'objet pointant vers chaque objet individuel étant associé à chaque zone, ledit paramètre définissant la propension de la zone à subir une modification de taille et en cas de modification de la taille de l'image, les tailles des zones étant d'abord déterminées à l'aide des degrés de propension de modification de taille puis les objets individuels disposés à l'intérieur des zones étant ensuite adaptés dans leur taille à l'intérieur des zones au niveau de la taille de zone ; et
- le programme de traitement des données définissant, par modification de la taille des objets individuels, d'après les étapes de procédé précédentes, d'abord une taille de zone minimale pour chaque zone puis une taille de zone maximale puis les zones étant réduites graduellement en partant d'une valeur moyenne déduite de la taille de zone minimale et maximale, jusqu'à ce que les zones couvrent la surface souhaitée de l'image, la taille des objets disposés dans les zones étant adaptée après détermination des tailles de zone.

2. Procédé pour modifier les dimensions d'une image mémorisée électroniquement selon la revendication 1, **caractérisé en ce que** dans une première étape de procédé réalisée manuellement, l'image est adaptée à une première dimension par mise à l'échelle proportionnelle avec une modification de la dimension d'objet horizontale pour atteindre une largeur théorique souhaitée ou avec une modification de la dimension d'objet verticale pour atteindre une hauteur théorique souhaitée et **en ce que** l'adaptation à une deuxième dimension se produit lors d'une deuxième étape de procédé, la modification des dimensions d'objet se produisant pendant la deuxième étape de procédé à l'aide des propriétés d'objet mémorisées.

3. Procédé pour modifier les dimensions d'une image mémorisée électroniquement selon l'une quelconque des deux revendications précédentes, **caractérisé en ce que** les propriétés d'objet définissent au moins la capacité de déplacement maximale dans au moins une direction et la modification maximale de la dimension d'objet horizontale et/ou verticale.

4. Procédé pour modifier les dimensions d'une image mémorisée électroniquement selon l'une quelconque des revendications précédentes, **caractérisé en ce que** les propriétés d'objet d'au moins un objet individuel comprennent une indication de verrouillage qui empêche toute modification de la taille d'un objet.

5. Procédé pour modifier les dimensions d'une image mémorisée électroniquement selon l'une quelconque des revendications précédentes, **caractérisé en ce qu'**au moins quelques objets individuels sont des objets d'image, les propriétés d'objet comprenant en outre une indication de bord qui définit une zone de tolérance, la modification de la taille de l'objet d'image se produisant également par troncature ou ajout d'une zone de bord sur au moins un côté des objets d'image.

6. Procédé pour modifier les dimensions d'une image mémorisée électroniquement selon l'une quelconque des revendications précédentes, **caractérisé en ce qu'**au moins un objet individuel échangeable est prévu, pour lequel un ou plusieurs objets alternatifs sont prévus, lesquels sont de taille différente de l'objet individuel échangeable, les propriétés d'objet de l'objet individuel échangeable comprenant une indication alternative qui entraîne la sélection d'un plus petit objet alternatif en cas de dépassement inférieur d'une grandeur minimale ou d'un plus grand objet alternatif en cas de dépassement d'une grandeur maximale.

7. Procédé pour modifier les dimensions d'une image mémorisée électroniquement selon l'une quelconque des revendications précédentes, **caractérisé en ce que** les propriétés d'objet d'au moins un objet individuel comprennent une indication de transfert qui définit une capacité de déplacement de l'objet individuel par rapport à un point de référence défini.

8. Procédé pour modifier les dimensions d'une image mémorisée électroniquement selon la revendication précédente, **caractérisé en ce que** le point de référence est un point d'un autre objet individuel.

9. Procédé pour modifier les dimensions d'une image mémorisée électroniquement selon l'une quelconque des revendications précédentes, **caractérisé en ce que** les propriétés d'objet d'au moins un objet individuel à caractère en partie chevauchable comprennent une indication de chevauchement qui définit une zone de l'objet individuel pouvant être chevauchée par d'autres objets.

10. Procédé pour modifier les dimensions d'une image mémorisée électroniquement selon la revendication précédente, **caractérisé en ce que** les propriétés d'objet de l'objet individuel à caractère en partie chevauchable comprennent une ou plusieurs indications de référence qui indiquent quel autre objet individuel est autorisé à chevaucher l'objet individuel à caractère en partie chevauchable.

11. Procédé pour modifier les dimensions d'une image mémorisée électroniquement selon l'une quelconque des revendications précédentes, **caractérisé en ce qu'**au moins quelques objets individuels sont des objets de texte, les propriétés d'objet comprenant les indications de format de texte de la zone de variation maximale de la taille de police et/ou de la zone de variation maximale de l'écartement entre les signes et/ou la zone de variation maximale de l'écartement entre les lignes.

12. Procédé pour modifier les dimensions d'une image mémorisée électroniquement selon la revendication précédente, **caractérisé en ce que** les indications de format de texte comprennent des polices alternatives avec des largeurs plus ou moins importantes.

13. Procédé pour modifier les dimensions d'une image mémorisée électroniquement selon l'une quelconque des deux revendications précédentes, **caractérisé en ce que** des passages individuels sont pourvus d'un attribut superflu dans les objets de texte, les passages pourvus de l'attribut superflu étant supprimés à atteinte d'une réduction maximale.

14. Procédé pour modifier les dimensions d'une image mémorisée électroniquement selon l'une quelconque des revendications précédentes, **caractérisé en ce qu'**au moins quelques objets individuels sont des objets de remplissage, les propriétés d'objet comprenant l'indication que l'image peut supprimer l'objet de remplissage lorsqu'une réduction critique est atteinte.

15. Procédé pour modifier les dimensions d'une image mémorisée électroniquement selon l'une quelconque des revendications précédentes, **caractérisé en ce qu'**au moins un objet d'arrière-plan est prévu, qu'il est chevauché par d'autres objets individuels et pourvu de propriétés d'arrière-plan définissant la modification de l'objet d'arrière-plan en cas de modification de sa taille.

16. Procédé pour modifier les dimensions d'une image mémorisée électroniquement selon la revendication précédente, **caractérisé en ce que** les propriétés d'arrière-plan définissent que l'arrière-plan se compose d'éléments d'arrière-plan non modifiables disposés les uns en dessous des autres, les éléments d'arrière-plan disposés sur le bord étant ébarbés pour épouser la taille réelle de l'image.

17. Procédé pour modifier les dimensions d'une image mémorisée électroniquement selon la revendication 15, **caractérisé en ce que** les propriétés d'arrière-plan définissent que l'arrière-plan se compose d'éléments d'arrière-plan de taille variable disposés les uns à côté des autres ou les uns en dessous des autres, les éléments d'arrière-plan disposés sur le bord étant ébarbés pour épouser la taille réelle de l'image.

18. Procédé pour modifier les dimensions d'une image mémorisée électroniquement selon la revendication précédente, **caractérisé en ce que** les paramètres de zone sont prédéfinis manuellement.

19. Procédé pour modifier les dimensions d'une image mémorisée électroniquement selon l'une quelconque des revendications précédentes, **caractérisé en ce que** les propriétés d'objet comprennent une option de requête qui fait qu'un utilisateur de l'installation de traitement des données peut encore modifier les propriétés d'objet préréglées pour influencer a posteriori la modification de taille.

20. Procédé pour modifier les dimensions d'une image mémorisée électroniquement selon la revendication précédente, **caractérisé en ce que** l'option de requête est activée en cas de modification de la taille de l'objet individuel.

21. Procédé pour modifier les dimensions d'une image mémorisée électroniquement selon la revendication précédente, **caractérisé en ce que** l'option de requête est activée par l'utilisateur par une entrée, notamment en cliquant sur l'objet individuel au moyen d'une souris informatique.

22. Procédé pour modifier les dimensions d'une image mémorisée électroniquement selon l'une quelconque des revendications précédentes, **caractérisé en ce que** plusieurs tailles d'image auxquelles l'image peut être adaptée sont prédéfinies.

23. Procédé pour modifier les dimensions d'une image mémorisée électroniquement selon la revendication précédente, **caractérisé en ce que** les tailles d'image sont les tailles des affiches standard, notamment une page entière, une troisième de couverture sur chant ou une deuxième de couverture sur chant d'un support d'impression.

24. Procédé pour modifier les dimensions d'une image mémorisée électroniquement selon la revendication précédente, **caractérisé en ce que** les propriétés d'objet sont mémorisées dans un fichier de paramètres séparé.

25. Programme de traitement des données duquel un procédé selon l'une quelconque des revendications précédentes est réalisé.

26. Programme de traitement des données selon la revendication précédente, **caractérisé en ce qu'**il est réalisé sous la forme d'un programme plugiciel pouvant être exécuté dans un programme DTP.

27. Système de réservation d'annonce doté d'un programme graphique qui est exécuté sur une installation de traitement des données intégrée dans un réseau, un fichier d'image pouvant être réalisé via le programme graphique, ledit fichier pouvant être transmis par l'intermédiaire du réseau à une préparation d'impression et après adaptation du fichier d'image aux dimensions des colonnes ou aux pages du support d'impression, la taille de l'image à la base du fichier d'image pouvant être modifiée selon l'une quelconque des revendications 1 à 24.
